**Europäisches Patentamt**

**European Patent Office**

**Office européen des brevets**

(19)

(11) Publication number: **0 027 540**

**A2**

(12) # EUROPEAN PATENT APPLICATION

(21) Application number: **80105435.4**

(22) Date of filing: **11.09.80**

(51) Int. Cl.3: **G 01 H 9/00**

(30) Priority: **11.09.79 US 74268**
**11.09.79 US 74270**

(43) Date of publication of application:
**29.04.81 Bulletin 81/17**

(84) Designated Contracting States:
**DE FR GB IT NL SE**

(71) Applicant: **Hydroacoustics, Inc.**
**321 Northland Avenue**
**Rochester, New York 14610(US)**

(72) Inventor: **Nelson, David E.**
**1532 Stone Road**
**Rochester, N.Y. 14615(US)**

(72) Inventor: **Bouyoucos, John V.**
**320 Inwood Drive**
**Rochester, N.Y. 14625(US)**

(74) Representative: **Wagner, Karl H., Dipl.-Ing.**
**P.O.Box 22 02 46 Gewuerzmuehlstrasse 5**
**D-8000 München 22(DE)**

(54) **Optical sensor and transducer array system.**

(57) An optical transducer with an optical waveguide having two paths for the propagation of light is deformed in response to acoustical pressure variations or other parameters to be sensed to modulate the amplitude of the light propagated along the two paths in opposite polarities. The light outputs of the two paths are sensed by photodetectors and applied to an electrical differencing circuit. The mean values of the photodetector outputs are balanced as by mechanically providing a predetermined bias deformation of the fiber, or by electrically matching outputs of the detectors such that, on the average, the output of the differencing circuit is zero. Dynamic deformation of the fiber in the transducer results in unbalanced outputs of the photodetectors which unbalance is sensed by the differencing circuit. This differential detection method minimizes optical and mechanical sources of noise in the light source and waveguide and leads to increased signal-to-noise and enhanced dynamic range of the transducer.

An array of optical waveguide transducers, especially suitable for use in a multi-channel hydrophone seismic streamer, contains optical waveguides which are deformed in response to the parameter being sensed (underwater acoustic energy in the case of the seismic streamer). Two optical signals are obtained from each transducer, amplitude modulated in opposite polarity in accordance with the parameter and returned to a collection point by way of optical signal highways, such as optical fiber waveguides. The optical signals are time division multiplexed on the return highways by successively providing light pulses to each of the transducers upon activation of separate light sources associated therewith which are electrically activated by electrical signals propagated along a transmission line wherein the electrical signals are successively delayed. The optical signals on the return waveguides appear in time slots corresponding to the successive delays and may be sequentially interrogated at a rate compatable with the frequency response of the array system. At the collection point, the outputs of the return waveguides are subtracted thereby summing the optical signals from each transducer, while reducing noise introduced into the system as may be due both to variations in the amplitude of the light from the sources and mechanically due to deformation or bending of the optical waveguides other than in response to the parameter being sensed.

-1-

## Description

### Optical Sensor and Transducer Array System

The present invention relates to optical sensors and particularly to an optical transducer system utilizing optical waveguides which are deformed to amplitude modulate light in accordance with a parameter to be transduced.

This application is related to US application Serial Numbers 74270 filed in the name of John V. Bouyoucos. A copy of this application is filed together with this application and forms part of the instant disclosure.

The term "light"as used herein is intended to encompass both visible light as well as light in other parts of the spectrum than visible light which may be propagated by the optical waveguides which are used in the transducer system provided by the invention.

The invention is especially suitable for use with optical fiber waveguides which have a clad around a core; the clad being of material having a lower index of refraction than the core. Such optical fibers, when deformed, couple light which is propagated through the core into the clad in accordance with the amount of deformation of the fiber. By deformation is meant either flexure or deflection of the fiber or of the clad. The principle of variably coupling the light propagated from the core to the clad and thereby modulating the light in the core and in the clad, as well as means for removing or tapping the light from the clad have been heretofore described in Miller, U.S. Patent No. 3,931,518 issued January 6, 1976; Miller, U.S. Patent No. 4,019,051 issued April 19, 1977; Dyott, Patent No. 4,135,780 issued January 23, 1979; Jeunhomme & Pocholle, Appl. Phys. Lett., Vol. 29, No. 8,485 (15 October 1976); and Keck, Schutz & Zimar, Attenuation of Multimode Glass Optical Waveguides, September, 1972).

The invention may also be used with other types of deformable optical waveguides where light modulated in accordance with the deformation extent may be available from more than one part of the waveguide. Such waveguides may operate in accordance with the principle of diffraction, variable absorption or other optical effects. Some of such waveguides are described in Maher, Patent No. 4,128,299 issued December 5, 1978 (Maher mentions six patents and patent applications therein, namely Conwell, Ser. No. 621,312; Brandt et al, 3,856,378; Snitzer 3,625,589; Sosnowski 3,802,760; Li et al, 3,804,489; and McNaney 3,704,060). An optical transducer having a flexible optical waveguide which is deformed to provide modulation of the light propagated therethrough which is relevant to the present invention is Wright 4,142,774 issued March 6, 1979. Other optical transducers relevant to the invention in that the principle of deformation is used in the transduction of the parameter to be sensed are Witt 3,051,003 issued August 28, 1962; and Duke 3,056,297 issued October 2, 1962.

The invention is especially suitable for use in providing an optical hydrophone. A survey of various proposals for optical hydrophones is described in Shajenko, Progress on Optical Hydrophones, U.S. Navy Journal of Underwater Acoustics, Vol. 29, No. 2, 169 (April 1979) (see also Bucaro et al U.S. Patent No. 4,162,397 issued July 24, 1979).

Optical transducers and particularly optical hydrophones have not found acceptance and have not been more advantageous to use than transducers using crystals principally because of problems in obtaining both a large dynamic range and high sensitivity as needed in many applications for such transducers, particularly under water as hydrophones. The dynamic range is restricted principally because of the limitations of the optical modulation scheme employed and the effects of optical/mechanical noise. Large dynamic range is needed in hydrophone applications, since in many instances the hydrophone must be able to observe a weak return signal in the presence of high power radiated signals. Sources of noise may be optical in nature and may be due to the light source which may vary in intensity. There is also inherent photon noise as well as shot noise in photodetectors and electrical signal amplifiers. Another significant source of noise, mechanical in nature, is generated in the optical fiber waveguide itself and may be due to deformation of the guide as it flexes. Such flexure can result prior to or after the transducer deformer and may have a similar effect in modulating the light remaining in the core and coupled to the clad. The dynamic range of the optical transducer first starts at this noise floor.

It is therefore a principal object of the present invention to provide an improved optical transducer system in which the effects of noise introduced into the system are minimized.

It is another object of the present invention to provide an improved optical transducer system having wide dynamic range of response to the parameter which is to be sensed and coupled to the output of the system.

It is a further object of the present invention to provide an improved fiber optic transducer system which may be used to sense various parameters, particularly acoustic signals, and is especially adapted to provide a hydrophone system.

It is a still further object of the present invention to provide an improved optical transducer system using an optical waveguide in which noise introduced due to the source of light which propagates through the guide as well as due to transmission through the guide itself is minimized.

It is a still further object of the present invention to provide an improved optical transducer which operates by selective deformation of an optical waveguide.

It is a still further object of the present invention to provide an improved optical transducer which amplitude modulates the output signal therefrom in accordance with the parameter being sensed.

It is a still further object of the present invention to provide an improved optical waveguide transducer, in which light coupled from the core to the clad of an optical waveguide is modulated by deforming the guide with the difference between the light in the core and in the clad being sensed to provide a differential sensor, wherein extransous noise effects are minimized.

Briefly described, an optical transducer system according to an embodiment of the invention makes use of an optical waveguide. This waveguide may, for example, be a planar form waveguide or an optical fiber waveguide. The waveguide has juxtaposed portions of material which are transmissive of light and which are of different indexes of refraction. These portions extend longitudinally along the guide and may be the core and clad of an optical fiber waveguide. The waveguide is deformed in response to the parameter to be transduced as by means of a flexurally mounted member having a grating which causes a multiple flexure of a section of the guide. Such deformation modulates the amplitude of the light which is propagated along different paths in the guide. In the case of an optical fiber, both the light propagating through the core and through the clad are modulated with, for example, the light amplitude in the cald increasing while the light amplitude in the core is decreasing for increasing deformation, the total light remaining substantially constant. The light from the different paths is separately detected and an electrical output corresponding to the difference in amplitudes therebetween is provided. The means for providing this output may be an analog or digital difference circuit. The average or D.C. value of the signals, the difference between which is obtained, is desirably nulled. This may be accomplished by applying a mechanical bias to the deformer and/or by electrical circuit means which control the amplitude of electrical signals corresponding to the optical signals from the different paths in the guide, or both.

Whereas the mode coupling created by the deformer has been described as between the modes of propagation within the core and the clad of the waveguide as a preferred embodiment, other mode combinations may exhibit coupling for which differential sensing is useful. These other mode combinations may include, for example, sets of core modes of different order. A set of modes includes at least one mode and follows a distinct path of light propagation through the waveguide structure having light output which is separately detectable from light which propagates along other paths. Also, combination waveguide structures embodying multiple cores may be employed where the coupling due to deformation is between the several cores. Other combination structures may include guides with multiple clads. Fundamentally, the invention encompasses deformer means, sensitive to the parameter one wishes to sense, which can modulate light energy along two separate, guided paths such that the light energy increases along one path and decreases along the other path for a deformation of one polarity with respect to a mean deformation, and then decreases along the one path and increases along the other path for a deformation of the other polarity. Optical means, such as lenses, aperture plates, or special couplers may be used to assure that only the light which propagates along a desired path in the waveguide reaches the detector for that path. By measuring the difference in the light intensity along the two paths, an output is obtained which is proportional to the signal being sensed. At the same time, the differencing process tends to minimize noise energy which is propagated symmetrically along the two paths such as noise introduced at the light source or in symmetrical bending of the guided paths in regions other than at the deformer.

HA-0046.0

- 7 -

The present invention also relates to optical transducer systems and particularly to a system or array of optical transducers which provide time division multiplexed output signals to a single collection point.

The invention is especially suitable for use in providing hydrophone arrays particularly in multi-channel hydrophone seismic streamers which may be towed under water to collect geophysical exploration data in the form of acoustic energy reflected through the water to the array from underground formations so as to obtain high resolution mapping of such formations.

Optical transducers have been proposed which involve the use of optical waveguides and the deformation thereof to modulate output optical signals. Such optical transducers may use an optical fiber waveguide which is deformed by a grating in response to the parameter to be transduced; such deformation varying the coupling of the light propagated through the fiber from, for example, the core thereof to the clad, which has a lower index of refraction than the core. The principle upon which some of such deformable optical fiber transducers operate is described in Miller, U.S. Patent No. 3,931,518 issued January 16, 1976; Miller, U.S. Patent No. 4,019,051 issued April 19, 1977; Dyott, U.S. Patent No. 4,135,780 issued January 23, 1979; and in Jeunhomme and Pocholle, Directional Coupler For Multi-mode Optical Fibers, Appl. Phys. Lett., Vol. 29, No. 8, 15 October 1976, and (Keck, Schutz & Ziman, Attenuation of Multimode Glass Optical Waveguides, September 1972.)

Optical transducers which operate by deformation of an optical waveguide such as a fiber are also described in Maher 4,128,299 issued December 5, 1978; and references cited therein (Conwell, et al, U.S. Patent Application, Ser. No. 621,312, filed October 10, 1975, Brandt et al 3,856,378; Snitzer 3,625,589; Sosnowski 3,802,760; Li et al 3,804,489; and McNaney 3,704,060). Other transducers which provide modulation upon deformation of an optical fiber or a surrounding member are described in Witt 3,051,003 issued August 28, 1962; Duke 3,056,279 issued October 2, 1962, and Wright 4,142,774 issued March 6, 1979. It has also been proposed to provide a transducer array using an optical fiber which is deformed by deformers located successively along the line. Light is tapped from the line after each transducer to provide a return signal. The delays between the deformers are, due to the speed of propagation of light in the waveguide, extremely short making effective separation of the signals allocated to different transducers difficult, unless the deformers are widely spaced apart or the fiber between sensors is coiled to increase its effective length. Noise is also introduced into the output. Such noise may be photon noise, noise due to variation in amplitude of the light which is propagated along the fiber and noise due to bending or other deformation of the fiber at places other than where the fiber is intended to be deformed in response to the parameter being sensed. Also the propagation of the signal is subject to attenuation at each deformer as the signal is coupled out thereby limiting the number of deformers and transduction points where cognizable signals are available. The presence of noise effectively decreases the sensitivity and dynamic range of the transducer system in that the portion of the range where signals are produced within the noise is not usable.

The principles of the invention may find application to other types of optical transducers which are effectively deformed in order to provide modulated optical signals. A survey of such transducers which have been developed for use as optical hydrophones is described in Shajenko, Progress on Optical Hydrophones, U.S. Navy Journal of Under Water Acoustics, Vol. 29, No. 2, 169 (April 1979) (see also Bucaro et al U.S. Patent No. 4,162,397 issued July 24, 1979).

In order to obtain high resolution response and mapping of geological formations which are under water, hydrophone arrays known as hydrophone streamers have been used. The resolution obtained in the mapping of the formations increases with the number of hydrophones, and streamers using upwards of 500 hydrophones have been proposed. Such streamers incorporate a large amount of electronic hardware and cabling for interrogating the hydrophones and returning the signals to the collection point, which usually is a seismic vessel which tows the streamer. Because of the complexity of the streamer, it is very expensive and increases the cost of geophysical exploration under water, particularly since it can be expected that streamers will be lost from time to time. Such streamers are described in an article by Savit and Siems, "A 500-Channel Streamer System," which was presented at the Offshore Technology Conference in Houston, Texas, May 2-5, 1977, which article also makes reference to patents which describe the electronic time multiplexing equipment of such a streamer system, namely Siems et al, 3,996,553, Savit 3,990,036 and Siems 4,005,273.

It is a feature of this invention to provide a system with optical hydrophones which can provide sufficient channels for high resolution and yet is much lower in cost than hydrophone streamers of the above discussed type.

Accordingly, it is an object of the present invention to provide an improved multiple transducer array using optical transducers.

It is a further object of the present invention to provide an improved optical multi-channel transducer system.

It is a still further object of the present invention to provide an improved sensor array especially adapted for geophysical exploration which may be used as a seismic streamer.

It is a still further object of the present invention to provide an improved optical transducer array system which is operable on a time division multiplex basis.

It is a still further object of the present invention to provide an improved fiber optic transducer array system in which the effects of noise are minimized and dynamic range is enhanced.

It is a still further object of the present invention to provide an improved optical transducer array system adapted for use as a seismic array whose signals are produced on a time division multiplexed basis within time slots which are reasonable in duration even where the transducers are spaced close to each other.

It is a still further object of the present invention to provide an improved optical hydrophone streamer adapted to have large numbers of hydrophone channels which is lower in cost in both manufacture and use than multiple channel hydrophone streamers as have heretofore been put into use.

Briefly described, a transducer system embodying the invention has an array of optical transducers. Each of these transducers has an optical waveguide with at least two output ports, such as may be provided by portions of different index of refraction and which propagate light applied to an input end of the transducer. This waveguide is preferably an optical fiber with the core and clad which surrounds the core of different indexes of refraction. The parameter to be sensed or transduced, such as the acoustic signal in an underwater environment where the system is used in a hydrophone streamer, is applied to deform the guide and modulate the amplitude of the light which is propagated through the guide to produce output optical signals of opposite polarity at the output ports. (e.g., from the fiber core and clad). Separate electro-optical light sources, such as light emitting diodes are provided for applying light to the input ends of each of the guides. An optical signal return highway is provided by a pair of optical waveguides, such as other optical fibers. The output ports of the transducer waveguides are coupled to different ones of these return highway waveguides, such that optical signals from each of the transducers may be transmitted along these guides to a collecting point. Each transducer is selectively activated by successively enabling the light source associated therewith. If desired, several transducers are operated in parallel, one light source may be provided for the parallel actuated transducers in the group or the light sources for each transducer activated simultaneously. The successive activation of the light sources may be accomplished by means of an electrical signal transmission line having successive sections each of which provides a delay. The sections are coupled to the light sources and successively enable the sources. Accordingly, the parameter which is sensed appears in time division multiplexed relationship in successive time slots equal to the delay time of each section. At the collecting point the optical signals may be converted into electrical signals and outputs corresponding to the differences

- 13 -

therebetween obtained by analog or digital circuitry. The digital circuitry may be synchronized with the times of enablement of the light sources at the transducers. The optical signals from the transducers may be balanced on a DC or average basis by biasing the transducers and/or the DC or average values of the electrical signals at the collecting point may be balanced or normalized. The differential output enables the minimization of the noise components of the signal and effectively increases the sensitivity and dynamic range of the system.

The foregoing and other objects, features and advantages of the invention as well as presently preferred embodiments thereof will become more apparent from a reading of the following description in connection with the accompanying drawings in which:

FIG. 1 is a block diagram showing an optical sensor system embodying the invention;

FIG. 2 is a more detailed block diagram illustrating an optical sensor system embodying the invention;

FIG. 3 is a block diagram showing an electronic system for obtaining the outputs from the optical modulator of the transducer system which is presently preferred for use when analog circuitry is desired;

FIG. 4 is block diagram illustrating an optical sensor system having digital circuits for providing the output therefrom;

FIGS. 5a, b, and c, are sectional views (FIGS. 5b and c being fragmentary views of a portion of FIG. 5a) of a fiber optic modulator which may be used in a system embodying the invention such as illustrated in FIGS. 1, 2, and 4;

FIG. 6 is a perspective view illustrating the lower half of the device shown in FIG. 5a; and

FIG. 7 is a plot of curves illustrating the operation of the device as shown in FIGS. 5a, b and c.

FIG. 8 is a block diagram of an optical transducer array system, especially adapted for use in a hydrophone seismic streamer, which system embodies the invention;

FIG. 9 is a simplified schematic diagram showing one of the optical transducers, the light source and activation circuit therefor, as well as circuitry for obtaining electrical outputs from the return fibers of the system;

FIG. 10 is a block diagram illustrating another circuit for deriving electrical outputs from the transducer system shown in FIG. 8 ;

FIG. 11 is a block diagram illustrating an optical transducer suitable for use in the system shown in FIG. 8 having mechanical anti-aliasing means associated with the fiber modulator;

FIG. 12 is a sectional view of a fiber optic transducer which provides the modulator with an anti-aliasing filter as illustrated in FIG.11;

FIG.13 is a top view of the transducer shown in FIG.12;

FIGS.14 and 15 are sectional views along the lines 7-7 and 8-8 of FIG.12;

FIG.16 is a schematic diagram of the electrical analog of the mechanical circuit of the transducer shown in FIGS.12 to 15 to illustrate that it is a lowpass filter; and

FIG.17 is a circuit for digitally processing the optical signals provided by the return fibers shown in FIG. 8.

- 17 -

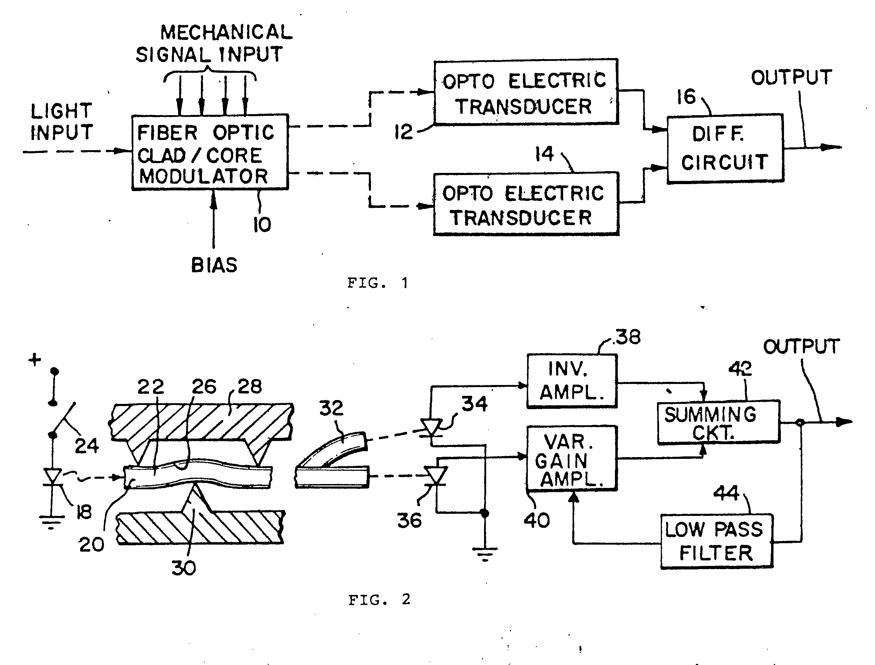

Referring more particularly to FIG. 1, a source of input light such as a laser or a light emitting diode is coupled to an optical waveguide which may be an optical fiber. This fiber is an exemplary and presently preferred waveguide structure which may be used in accordance with the invention. Other waveguide structures and other paths of propagation of light therein are also within the scope of the invention.

The fiber is part of a fiber optic modulator 10 in which the light propagated along the core of this first fiber is coupled partially to the clad. A tap, such as with a second optical fiber, is provided which removes the light which is coupled to the clad. The first optical fiber and the second optical fiber provide separate outputs from the modulator 10 to optoelectric transducers 12 and 14 which convert these optical signals into electrical signals. These electrical signals are applied to a difference circuit 16. An electrical output from the system thus corresponds to the difference in amplitude between the electrical signals from the optoelectric transducers 12 and 14 and their corresponding optical signals from the modulator 10. The optoelectric transducers employed in the system are preferably photodetectors such as PIN diodes. The type of photodetector which is selected will depend upon cost and packaging considerations.

The modulator 10 contains a deformer which enables the light which is coupled to the core of the fiber at the input of the modulator 10 to be partially coupled to the clad. Preferably a bias force is applied to the deformer. This bias insures that the electrical output from the difference circuit will be maintained at a minimum amplitude on an average or D.C. basis. In other words, the light which is coupled to the clad due to the bias will be of a sufficient amplitude to balance the remaining light in the core of the fiber. The optical signals from the second fiber which taps the clad and the optical signals from the first fiber are thus of approximately equal amplitude on a DC or average basis. The optoelectric transducers 12 and 14 thus provide average electrical signals which are nearly balanced. The difference circuit 16 can then be trimmed to provide a nulled average amplitude output. Now, in the presence of a mechanical signal input corresponding to the parameter to be transduced, the light coupled to the core and clad of the fiber will become unbalanced. For example, for an increasing deformation with respect to the average bias, more light is coupled to the clad than remains in the core. For a decreasing deformation with respect to the average bias, more light stays in the core than is coupled to the clad. The difference circuit 16 then provides an output corresponding to the dynamic mechanical signal (viz., an acoustic pressure variation). In the event that the transducer system is used under water for hydrophone applications, the acoustic signal may be a seismic wave propagated through the water or a sonar signal.

The light input may be communicated to the modulator 10 through a long optical fiber, for instance from the surface when the modulator is disposed under water in the hydrophone application. Noise is inherently present due to variations in the intensity or amplitude of the light source. Such noise variation may be photon noise or it may be due to variations in the power energizing the light source or other variations which affect the light amplitude. All of this noise is a component of the light propagated to the modulator. In addition, the fiber leading to the modulator 10 may be flexed and distorted. This can cause a portion of the signal power to be coupled to the clad or leak out of the fiber. Such leakage or coupling varies with the flexing of the fiber and also contributes to the noise component of the signal power. Such noise effectively amplitude modulates the optical carrier

HA-0046.0

and is amplitude modulation noise. The modulator 10 is also an amplitude modulation device such that the noise component adds to the signal component. The amount of deformation of the fiber in the modulator 10 is limited. Also the mechanical strength of the fiber limits the dynamic range of the modulation of the optical signals from the modulator 10 as a result of the mechanical signal input. The noise component can thus occupy a significant portion of the dynamic range. Unless the noise component is eliminated, the total dynamic range of the transducer system is correspondingly limited.

Such limitations are removed by reason of the partitioning of the optical signals between two branches which signals are equal in intensity and the subsequent differential signal processing. The noise is equal in the separate outputs from the modulator and removed in the difference circuit 16. The parameter being sensed which is shown as the mechanical input to the modulator 10 is, however, not balanced because it varies the modulation of the light at the modulator outputs in opposite senses. Thus, the noise from the light source, from flexing of the input waveguide or output waveguides (as long as the latter flex together) is cancelled in the difference circuit 16 and does not appear in the output to a substantial extent. The output from the difference circuit 16 does vary in accordance with the mechanical input signal. The sensitivity of the transducer system is effectively enhanced since the noise component is nulled. The full dynamic range of the transducer is then available for utilization.

The equalizing of the noise may be accomplished in the electrical circuitry associated with the modulator or in the modulator itself by applying the bias. Both the bias and electrical circuit means may be provided to minimize the noise, and, by means of the differential circuit, to cancel it, thereby to increase the sensitivity and dynamic range of the system.

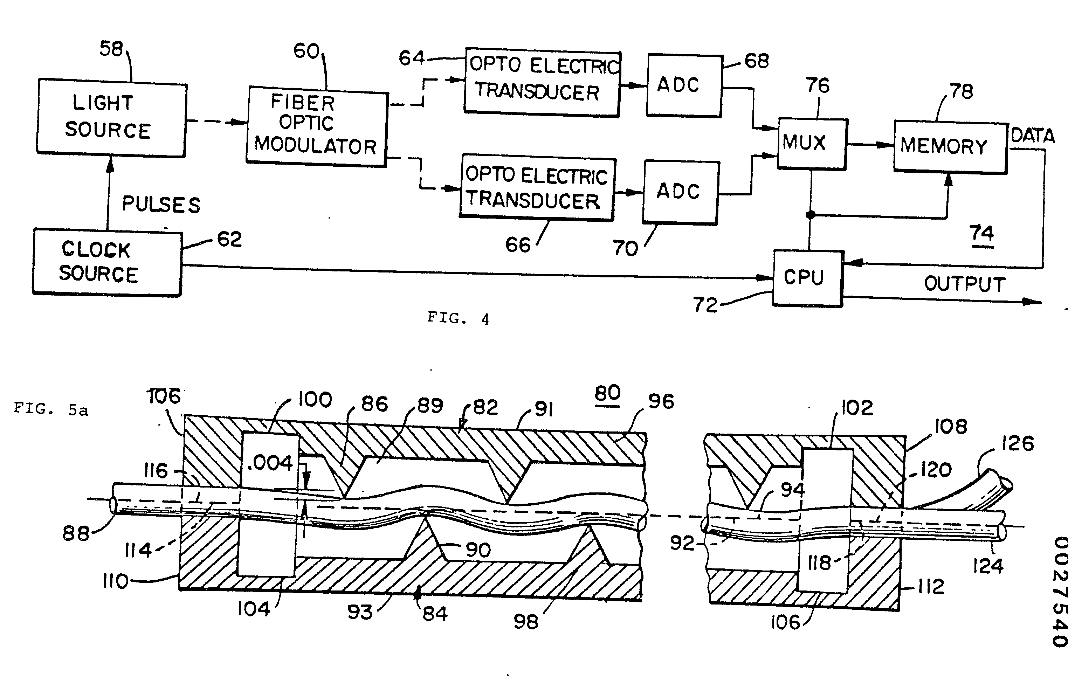

Referring to FIG. 2, the light input source is shown as a light emitting diode (LED) 18. This diode emits light which may be focussed, as by means of a lens or by close coupling, to the core 20 of the optical fiber waveguide 22. The light may be provided continuously, as when a switch 24 remains closed, or intermittently as pulses of light. The light propagates through the fiber 22 and is coupled from the core 20 to the clad 26 thereof, when the fiber is deformed. This deformation is shown as being the deflection of the fiber 22 between the teeth of gratings 28 and 30, between which the fiber 22 is sandwiched. A predetermined deformation in the form of a deflection of the fiber is provided by biasing the gratings 28 and 30 toward each other. Such biasing may be provided by spring means in a flexural support for the gratings 26 and 28 as will be described hereinafter in connection with FIG. 5. Alternatively, the deformation may be provided externally, for instance, in the case of a hydrophone or microphone, by the static ambient pressure. It is recognized that in many cases the mechanical biasing means will be imperfect, and the desired optical/electrical balance between the two outputs will not be struck. In this case, an electrical balance following the photodetectors 34 and 36 will suffice. Therefore, in the instant embodiment both a mechanical bias and electrical balancing are provided for.

A second optical fiber 32 is coupled to the fiber 22 past the deformer gratings 28 and 30 to extract light propagating in the clad. The fibers 22 and 32 provide the separate optical signals to optoelectric transducers in the form of photodetector diodes 34 and 36. It will be appreciated that phototransistors may also be used as the optoelectric transducers. The mechanical input signals may be applied to one of the gratings 28 or 30 directly or by means of a diaphragm and mechanical linkage. In the event that the system is used as a hydrophone it may be desirable to compensate for any deformation due to water pressure which increases with depth as the hydrophone descends below the surface. To this end, pressure compensation means may be provided for increasing the pressure in the volume between the gratings 26 and 28 which contains the fiber 22. A hydrophone having such pressure compensating means is the subject matter of the above referenced related application filed in the name of John V. Bouyoucos, concurrently herewith.

The difference circuit is provided by an inverting amplifier 38 and a variable gain amplifier 40. The outputs of these amplifiers when summed in a summing circuit 42 is the difference between the electrical signals corresponding to the pair of optical signals from the fibers 22 and 32 which are converted into the electrical signals by the diodes 34 and 36. To balance the signals so that the DC or average values are equalized and the noise is similarly equalized and cancelled in the summing circuit 42, there is provided a feedback circuit having a lowpass filter 44 and the variable gain amplifier 40. The lowpass filter may have a cutoff at a very low frequency (e.g., a few Hz). Then the gain in the path for amplifying the electrical signal from the diode 36, corresponding to the optical signal from the fiber 22, is varied until the DC or average value of the amplitude thereof is equal to the amplitude of the signal from the other diode 34, corresponding to the optical signal from the fiber 32. The difference in the amplitudes of these electrical signals is obtained from the difference circuit made up of the inverting amplifier 38 and summing circuit 42. The difference signal is applied to the gain feedback loop; and with sufficient loop gain, tends to drive the difference to zero. Of course, the feedback circuit may alternatively be on the opposite side and applied to control the gain of the inverting amplifier which then is a variable gain stage.

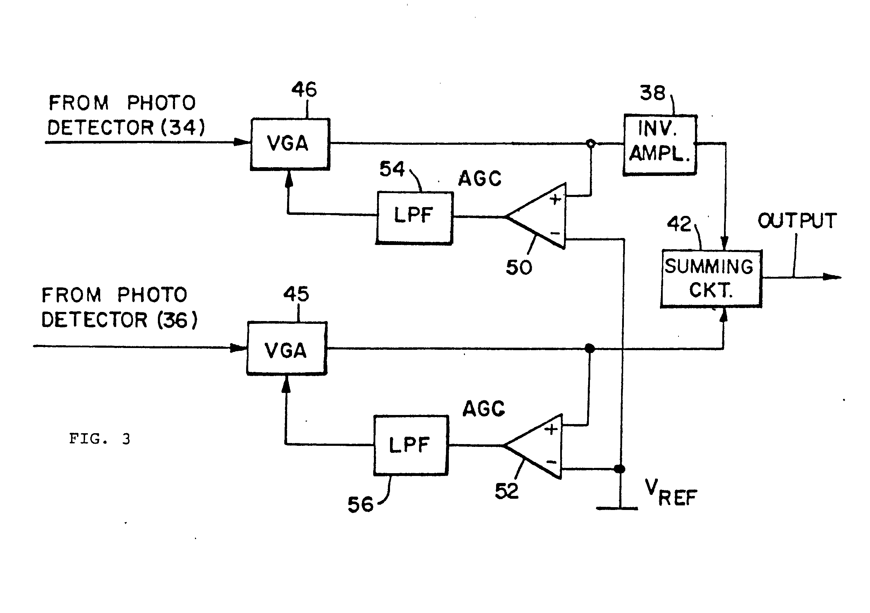

It is preferred, however, to normalize the amplitude of the signals from the photodetectors ahead of the summing circuit 42. Normalization may be implemented, as shown in FIG. 3, by circuitry having two variable gain amplifiers 45 and 46. The average value of the amplitudes of the electrical signals at the outputs of these amplifiers 45 and 46 is normalized to be equal to a reference amplitude equal to the voltage $V_{REF}$ from a reference potential source shown as a battery 48. Difference amplifiers 50 and 52 are connected respectively to the outputs of the variable gain amplifiers 46 and 45 and to the source 48. The outputs of the differential amplifiers are filtered in lowpass filters 54 and 56 having low cutoff frequencies, again of a few Hz, and applied as error signals to control the gain of the variable gain amplifiers 45 and 46.

It will be noted that the lowpass filters 44, 54 and 56 have frequencies below the lowest frequency in the frequency spectrum of the mechanical signals applied as the signal input to the deformer of the modulator (viz., to both the gratings 28 and 30 as shown in FIG. 2). By reason of the automatic gain control provided by the feedback circuits including the differential amplifiers 50 and 52 and the filters 54 and 56, not only are the electrical signals corresponding to the optical outputs from the fibers equalized in their average or DC values, but the electrical signal output for a given percent change in light occurring at the FOM is normalized as well. That is, the normalization corrects for such unwanted variations as the intensity of the light source 18 or losses in the transmission fibers 20, 32. The difference circuit including the inverting amplifier 38 and the summing circuit 42 thus provides an electrical output which is (a) standardized in output for a given FOM modulation, thus eliminating variations of light intensity in the system other than for which the parameter being sensed is responsible and (b) in which the noise components are substantially eliminated.

The circuits shown in FIGS. 2 and 3 are analog circuits and it may be desirable, particularly when several fiber optic modulators are provided in an array, to process the electrical signals on a digital basis. An exemplary digital system is shown in FIG. 4. This system includes a light source 58, such as may contain a light emitting diode or several light emitting diodes each associated with a different fiber optic modulator 60. These modulators may each be of the type described in connection with FIGS. 1 and 2.  The light source may include a switch, such as a switching transistor circuit, which is repetitively enabled by a train of pulses produced by the clock source 62.  The clock source 62 also provides an additional train of pulses which may be delayed from the first train of pulses and which identify the time of the return of the light pulses after propagating through the optical waveguide system.  These latter clock pulses are synchronous with the clock pulses which operate the light source 58 and control processing of the optical signals.

The separate outputs from the modulator or modulators 60 are translated into electrical signals by optoelectric transducers 64 and 66.  These outputs are sampled by analog to digital converters (ADC) 68 and 70.  The delayed pulses from the clock source 62 are applied to processing unit (CPU) 72 of a digital processing system 74.  The processing unit may be a microprocessor of the type generally available, which provides sampling and address signals to a multiplexer (MUX) 76.  The digital output signals from the converters 68 and 70 are thus sampled at a rate controlled and synchronous with the pulses which activate the light source and produce the light pulses.

Accordingly, each light pulse will produce a pair of outputs in the form of digital signals which are selected by the multiplexer 76 and stored in a memory 78.  Two digital signals are provided for each light pulse and are read out of the memory on data lines to the CPU 72 where they are normalized and subtracted from each other to provide the differential output. This differential output may be a digital signal which is available at the output ports of the CPU. Alternatively, the digital signal may be applied to a digital to analog converter and reconverted into analog form. It will be appreciated that the normalization and filtering process as carried on on an analog basis in the systems described in connection with FIGS. 2 and 3 are provided for digitally by manipulation of the digital signals from the memory in the CPU 72 in accordance with a program stored therein or in the memory 78. Thus the memory 78, multiplexer 76, and CPU 72 operate both as the normalization circuits and as the difference circuits which was described in connection with FIGS. 1, 2 and 3.

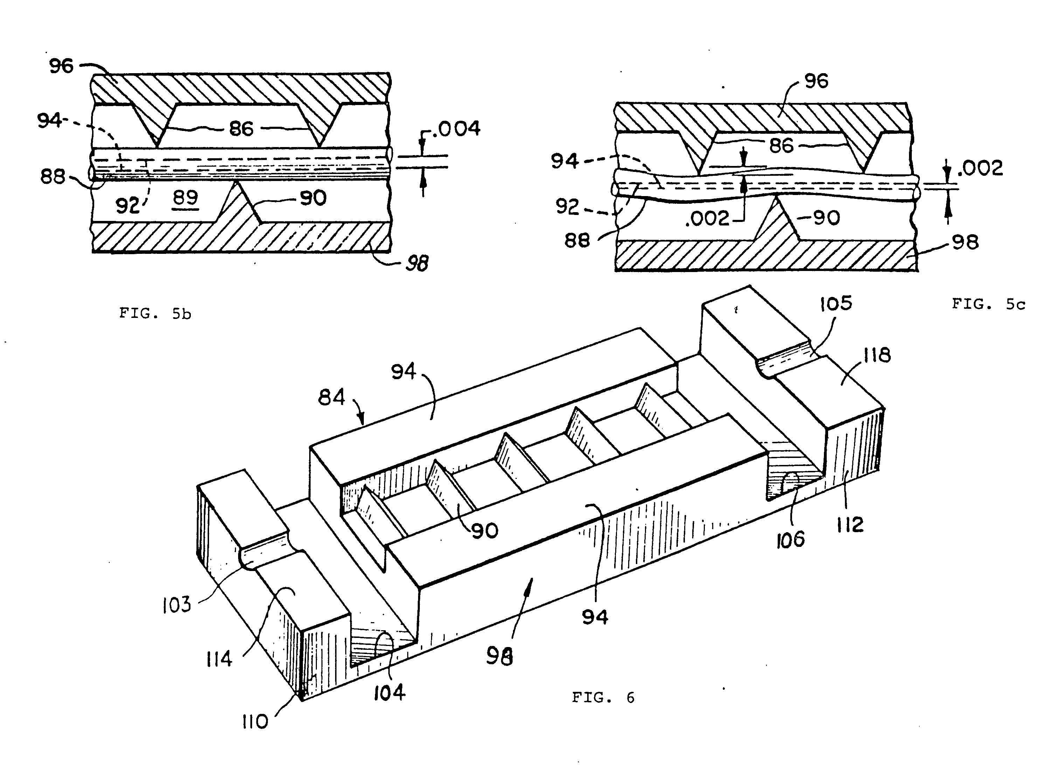

Referring to FIGS. 5 and 6, there is shown a deformer 80 which has an upper section 82 and a lower section 84 of like configuration. The lower section is illustrated in FIG. 6. Grooves 104 and 106 separate a central portion 98 of the lower section from the ends 110 and 112 thereof. The grooves 104 and 106 enable the central portion to flex with respect to the ends 110 and 112. The portion 98 of the lower section 84 of the deformer 80 has a row of teeth 90. These teeth are offset from each other longitudinally of the fiber 88 which is deformed. The teeth are disposed to periodically deform, by flexure, the fiber 88 as shown in FIG. 5a. The upper section 82 also has a central portion 96 with teeth 86 which are offset in a direction longitudinally of the fiber 88 from the teeth 90 in the lower section 84. The upper section 82 also has grooves 100 and 102 which separate the central portion 96 from the ends 106 and 108 of the upper section 82 and enable the central portion 96 to flex with respect to the ends 106 and 108 thereof. Except for longitudinal grooves (shown in FIG. 6 as the grooves 103 and 105 in the ends 110 and 112 of the lower section 84) the ends 106, 110 and 108, 112 of the upper and lower sections have their surfaces shown at 114 and 118 in FIG. 6 and by the dark lines at 114 and 118 in FIG. 5a, are in contact. The inner surface 94 of the central portion 98 of the lower section is opposed to the inner surface 92 of the central portion 96 of the upper section. These surfaces are coincident as shown by the dash line identified by both reference numerals 92 and 94 in FIG. 5a at the maximum inward flexure of the central portions 96 and 98 (which is the maximum flexure and deformation of the fiber 88). The surfaces 92 and 94 are apart at less than maximum deflection of the fiber, as when the fiber 88 is not flexed, as shown in FIG.5b and when the bias deformation alone is applied to the fiber 88 as shown in FIG. 5c. The teeth 90 are offset from surface 94 of the central portion 98 of the lower section 84 as shown best in FIG.6. The teeth 86 are similarly offset from the surface 92 of the central portion 96 of the upper section 82.

Because of the separation of the teeth 86 and 90 in the upper and lower grating section 82 and 84, in the absence of external pressure applied to the outer surfaces 91 and 93 of these sections, a predetermined bias is flexurally applied to the fiber.

For purposes of illustration, consider that the fiber 88 has a diameter of 10 mils (0.010 inch) and the predetermined deflection which is desired is

- 28 -

2 mils as shown in FIG. 5c. Now the deformer permits only a maximum deflection of 4 mils as shown in FIG. 5a, inasmuch as the opposing surfaces 94 and 92 of the central grating portions 96 and 98 come together into contact as shown in FIG. 5a. This prevents damage to the fiber.

When the pressure on surfaces 91 and 93 external of the chamber 89 decreases on a dynamic basis with respect to the pressure internal thereto, the teeth 86 and 90 move apart from each other to a position where the initial mechanical bias is effectively removed. The opposing surfaces 94 and 92 of the grating portions 96 and 98 then become separated by 4 mils as shown in FIG. 5b. It will therefore be seen that in order to provide for a maximum allowable dynamic deflection of the fiber of 2 mils, a 10-mil diameter fiber, the height of the teeth 86 and 90 below the surfaces 92 and 94 is 4 mils or one-half the fiber diameter minus one-half the allowable deflection. These dimensions are shown in FIG. 5a.

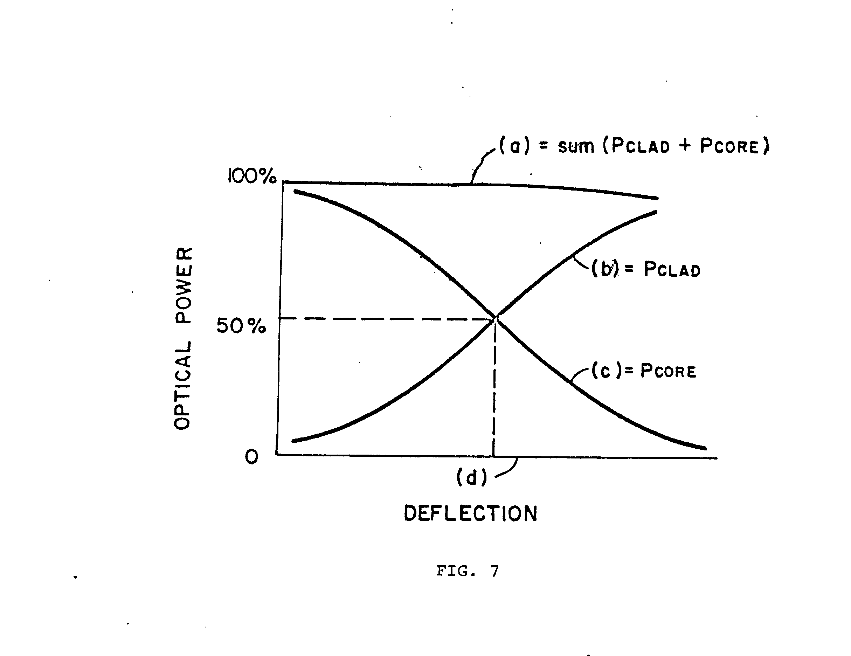

FIG. 7 illustrates the relationship between the intensity of the light (viz., the optical signal) obtained from the core of the fiber 88 at the output end thereof and from the fiber 126 which taps the light which is coupled into the clad of the fiber 88. A predetermined deflection indicated in FIG. 7 as (d), exists where these intensities are balanced and the power of the light coupled to the clad, indicated as curve (b) equals the power of the light remaining in the core as indicated by the curve (c). The power is equally portioned, split 50% into the clad and 50% into the core. The sum of the clad and core optical power remains close to 100% over the deflection range. This is shown by curve (a) of FIG. 7. It will, therefore, be observed that at the predetermined deformation which is shown as a deflection (d) in FIG. 7, the optical signals are balanced. This balance condition is upset by varying deflection. Such varying deflection may be caused by mechancial signals in the form of pressure differentials applied to the outside surfaces 91 and 93 of the deformer, for example, by acoustical energy applied thereto or otherwise by the parameter being sensed. Thus, as the deflection varies dynamically the output signals from the difference circuit whether implemented by analog means as shown in FIGS. 2 and 3 or digitally as shown in FIG. 4, corresponds to the parameter which is being transduced, while the noise components remain balanced or nulled in the output.

From the foregoing description it will be apparent that there has been provided an improved optical transducer system. The system has many applications as a sensor or transducer for varying types of mechanical signals which may be obtained by acoustic pressure variations or in response to other effects which can be translated into a mechanical signal, (e.g., acceleration). Variations and modifications of the hereindescribed system, for example to utilize different paths of propagation in the fiber or different optical waveguides or to take advantage of mechanical signals which correspond to various parameters, will undoubtedly suggest themselves to those skilled in the art. Accordingly the foregoing description should be taken as illustrative and not in a limiting sense.

So far, the invention may be summarized as follows:

1. An optical sensor system which comprises an optical waveguide first and second means each for detecting light which as propagated along different paths in said waveguide to reach said detection means, means for deforming said waveguide to provide a bias deformation which, on the average, approximately equally partitions the light energy which propagates to said detecting means along said different paths, and to modulate the partitioning of light energy between said paths in response to the parameter to be sensed, and means for providing an electrical output corresponding to the difference between light energies detected by said first and second detection means.

2. The invention as set forth in item 1 further comprising means for minimizing the average amplitude of said electrical output.

3. The invention as set forth in item 2 wherein said first and second detecting means provide first and second electrical signals and wherein said minimizing means includes means for normalizing said electrical signals, and means responsive to the difference between said normalized electrical signals for providing said electrical output.

4. The invention as set forth in item 1 wherein said first and second detecting means provide first and second electrical signals, said electrical output providing means including feedback means for balancing the average amplitude of said electrical
signals.

5.  The invention as set forth in item  4
wherein said feedback means comprises a lowpass
filter circuit having a cutoff frequency below the
lowest frequency of interest in said electrical
output, and means for feeding back said electrical
output through said filter circuit for controlling
the amplitude of at least one of said first and
second electrical signals.

6.  The invention as set forth in  item  4
wherein said balancing means comprises first and
second gain control circuits responsive to said
first and second electrical signals for normalizing
the average amplitudes thereof to equal a predetermined
value and means responsive to said first and second
signals after normalization to derive the difference
in amplitude therebetween to provide said electrical
output.

7.  The invention as set forth in item  1
further comprising pulse generating means for
generating synchronous light and electrical pulses
in succession, said generating means including means
for applying said light pulses to said waveguide
ahead of said deforming means, said first and second
detecting means providing first and second electrical
signals, said electrical output (providing means
comprising means) for converting said electrical
signals into successive digital signals, and data
processing means operated by said electrical pulses from said generating means for providing output data signals corresponding to said electrical output.

8. The invention as set forth in item 1 wherein said deforming means comprises at least one grating having teeth, a pair of members at least one of which flexurally supports said grating said members being opposed to each other with said waveguide therebetween and adjacent said teeth, said members having opposed surfaces which have a predetermined separation therebetween and come into contact when said grating imposes a maximum deformation upon said waveguide.

9. The invention as set forth in item 1 wherein said deforming means comprises at least one grating member, and means for flexurally supporting said grating member in contact with said waveguide to provide said bias deformation.

10. The invention as set forth in item 1 wherein said deforming means comrpises a pair of gratings having teeth, a pair of members having means flexurally supporting said gratings opposed to each other with said waveguide therebetween, said flexural supporting means yieldably urging said gratings toward each other to provide said bias deformation.

11. An optical transducer system which comprises an optical waveguide having juxtaposed portions of material of different indexes of refraction which extend longitudinally, means for deforming said waveguide in response to the parameter to be transduced whereby to modulate the amplitude of the light propagated through said portions of said waveguide, and means for separately removing the light propagating through each of said portions and providing an electrical output corresponding to the difference in amplitudes therebetween.

12. The invention as set forth in item 11 further comprising means for minimizing the amplitude of said electrical signal output in the absence of said parameter.

13. The invention as set forth in item 12 wherein said minimizing means comprises means for providing a pre-determined bias upon said waveguide to deform said guide to an extent sufficient to equalize the amplitude of light removed from each of said portions.

14. The invention as set forth in item 12 wherein said minimizing means further comprises means for normalizing electrical signals corresponding to the light separately removed from each of said portions, and means responsive to the difference between said normalized electrical signals for providing said electrical output.

15. The invention as set forth in item 12 wherein said minimum amplitude providing means comprises electrical signal processing means for equalizing the average value of said electrical output corresponding to the light removed from each of said portions.

16. The invention as set forth in  item 12 wherein said minimum amplitude providing means comprises means for providing a flexural bias upon said waveguide such that the amplitude of light removed from said portions is approximately equalized, electrical signal processing means for equalizing the average value of said electrical output corresponding to the light removed from each of said portions.

17. The invention as set forth in  item 11 wherein said optical waveguide is an optical fiber having a core and a clad respectively providing said portions of different indexes of refraction, said deforming means comprising means responsive to said parameter for applying pressure to deform at least said clad of said fiber to vary the amplitude of the light propagating through said clad and said core, said removing means and electrical output providing means including a second optical fiber coupled to said clad for tapping the light from said clad, photodetector means for providing separate electrical signals corresponding respectively to the light propagated by said first named and second fibers, and a difference circuit means responsive to said separate electrical signals for providing said electrical output.

18. The invention as set forth in item  17 wherein said deforming means comprises means for applying a predetermined pressure upon said fiber to apply a mechanical bias thereto such that the amplitudes of the light coupled to said clad and propagating in said core past said deforming means
are equalized.

19. The invention as set forth in item 18
wherein said deforming means comprises at least
one grating member, means flexurally supporting
said grating member in contact with said fiber
for providing said bias.

20. The invention as set forth in item 17
wherein said deforming means comprises a pair of
gratings having successive teeth, a pair of members
having means flexurally supporting said gratings
opposed to each other with said first fiber
therebetween and said teeth of said grating offset
from each other longitudinally of said fiber,
said members having opposed surfaces, said gratings
each being disposed a distance from said opposed
surfaces toward said first fiber equal to a
predetermined maximum deformation of said fiber,
said flexural supporting means of said members
yieldably urging said gratings toward each other
with a predetermined force to provide said bias
deformation.

21. The invention as set forth in item 11
wherein said deforming means comprises a pair of
gratings having teeth, a pair of members flexurally
supporting said gratings opposed to each other with
said waveguide therebetween, said members having
opposed surfaces which have a predetermined separation therebetween and come into contact with each other when said gratings impose a maximum deformation upon said waveguide.

22. The invention as set forth in item 17 wherein said difference circuit includes feedback means for balancing the average amplitude of said electrical signals which correspond to the light propagated by said first and second fibers.

23. The invention as set forth in item 22 wherein said feedback means comprises a low pass filter circuit having a cutoff frequency below the lowest frequency of interest in said electrical output, and means for feeding back said output through said filter circuit for controlling the amplitude of at least one of said electrical signals.

24. The invention as set forth in item 22 wherein said balancing means comprises first and second gain control circuits respectively responsive to different ones of said electrical signals for normalizing the average amplitudes thereof to a pre-determined value, and means responsive to said signals after normalization to derive the difference in amplitude therebetween for providing said electrical output.

25. The invention as set forth in item 17 further comprising pulse generating means for generating synchronous light and electrical pulses, said generating means including means for applying said light pulses to said fiber ahead of said deforming means, and said difference circuit means

- 37 -

comprising means for converting said electrical signals into successive digital signals, and data processing means operated by said electrical pulses from said generating means for providing output data signals corresponding to said electrical output.

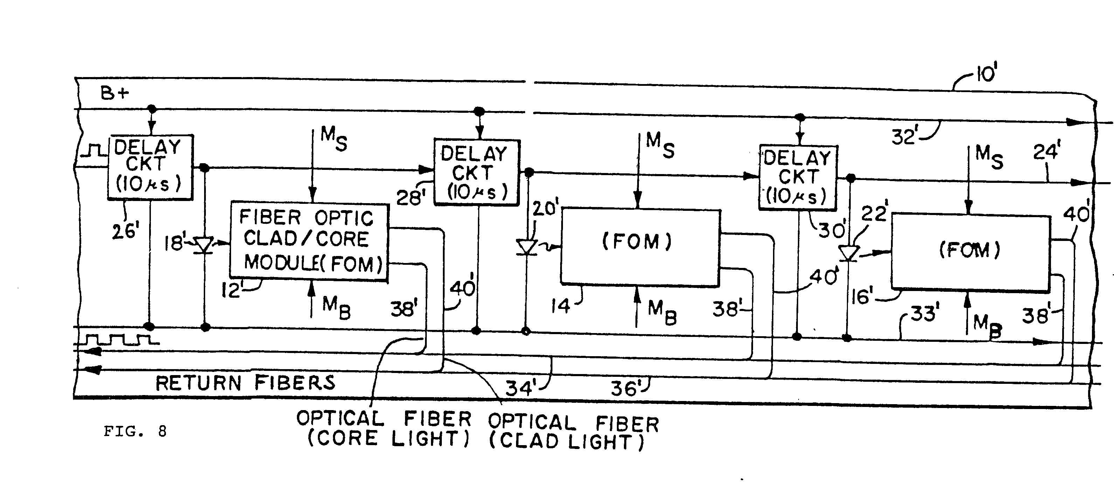

Referring now to FIG. 8 there is schematically shown a portion of a cable 10', in which is contained optical hydrophones which contain optical waveguides. In this illustrative example of a presently preferred embodiment of the invention the optical waveguides are optical fibers. These fibers are contained in fiber optic clad/core modulators, three of which 12', 14' and 16' are shown as being representative. The fiber optic clad/core modulators (some of which are identified in the drawing by the acronym FOM) may be disposed in the cable 10' so that the sea water carrying the seismic or other acoustic signal to be transduced may be incident on the FOM's 12', 14' and 16'. The cable 10', the FOM's 12', 14', and 16' and the components associated with the FOM's provide an optical hydrophone streamer. Several hundreds of optical hydrophones in the form of FOM's may be disposed successively along the cable 10'. The number of FOM's and their spacing is determined by the resolution desired of the target or of the earth formation which is to be detected or surveyed. For example, the FOM's may be 1 to 3 meters apart along the cable 10'.

Each of the FOM's has a separate light source, shown as light emitting diodes 18', 20' and 22', associated therewith. It may be desirable to sum the signals from a group of optical hydrophones into a single channel. The hydrophones themselves may be separate FOM's which are spaced apart successively along the cable 10'. Either a single light source or separate light sources which are illuminated simultaneously are then used. The signals from the group FOM's will then appear together.

The streamer with the cable 10' is adapted to be towed through the water, as by a seismic exploration vessel. This vessel also serves as the collection point for the signals (viz., the acoustic or seismic pressure) from each observation point. These observation points are the locations of the FOM's. In order to activate the light sources, a transmission line 24' for electrical pulses is provided which extends along the cable from the collecting point. A pulse generator provides the pulses at a rate at which the acoustic or seismic signals are to be sampled by the FOM's at each observation point along the cable. A suitable rate may be 1 KHz. It is a feature of this invention to enable the optical hydrophone to be sampled at a 1 KHz rate or any other rate which is compatible with the number of optical hydrophones in the streamer, while at the same time enabling the hydrophones to be located at observation points suitably spaced along the streamer to obtain the accuracy or target resolution which is desired. To this end, each section of the transmission line 24' between adjacent optical hydrophones provides a separate pulse delay. Exemplary delay circuits 26', 28' and 30' are shown in the sections of the line 24' ahead of the light emitting diodes 18', 20' and 22' which are connected to the outputs of these delay circuits 26', 18' and 30' respectively. The circuits may be delay lines and may have amplifiers associated therewith. Preferably one-shot multivibrators are used which are powered by voltage applied to a power line 32'. This voltage is indicated as B+ and may be generated at the collecting point. A power supply on the survey vessel may be provided for this purpose. An electrical return line 33' which is connected to a reference potential, such as ground, completes the circuits through the LED's 18', 20' and 22' and delay circuits 26', 28' and 30'.

When one-shots are used as the delay circuits they also provide amplification and pulse shaping of the pulses transmitted along the transmission line 24'. Consider for example that each delay circuit interposes a 10 microsecond (us) delay to the pulses which are provided at a 1 KHz rate, then the pulses are applied at the 1 KHz rate to each of the LED's but 10' us apart at each successive LED. The sampling of each LED is multiplexed in time slots 1000 us apart. An observation point (viz., a different FOM) is interrogated every 10 us. The maximum sampling rate for a 100 channel streamer is then 100 KHz. For 500 channels the total rate, considering a 1 KHz individual rate for each of the optical hydrophones, would be 500 KHz, with 2 us delay. Accordingly, the hydrophone streamer system with a 1 KHz individual sampling rate (viz., pulses generated at the head end of the line 24' at 1 KHz) can easily have 500 hydrophone channels and can accommodate over 1000 channels

Sampling theory states that signals sampled at a 1 KHz rate must contain no frequencey components above 500 Hz, or a deleterious effect called aliasing will occur. Consequently, the exemplary sampling frequency of 1 KHz used here could theoretically be used for signals with frequency components as high as 500 Hz. However, the use of an anti-aliasing filter is desirable. Such a filter may have a moderate cut-off slope over, for example, a frequency interval of 2:1. The system then can be effective in sensing signals with frequency components as high as 250 Hz.

In order to return the signals transduced by the optical hydrophones to the collecting point, a pair of optical waveguides in the form of optical fibers 34' and 36' are provided as return highways. A pair of waveguides in the form of optical fibers are connected from each FOM separately to the return fibers 34' and 36'. Each of the FOM's has a pair of output ports connected to output fibers 38' and 40' which carry light, for example, from the core and the clad of an optical fiber waveguide in the modulators. These output fibers 38' and 40' are coupled to the return fibers 34' and 36'. It is on these return fibers 34 and 36 that optical output signals corresponding to the parameter being sampled is communicated in time division multiplexed relationship (TDM) back to the collection point.

In the case of a seismic streamer, the parameter is acoustic (seismic) signals at each observation point at which the FOM's 12', 14' and 16' are located. The optical output signals are in the form of optical

-0046.1

pulses.  Since each FOM is interrogated by an optical pulse generated by its associated LED 18', 10' and 22', when the LED is activated by an electrical pulse transmitted along the transmission line 24', these optical pulses occur in successive time slots.  The time slots are 10' us in duration in the case where each delay circuits 26', 28' and 30' interposes a 10 µs delay.  Accordingly, the optical signals on the return fibers are time division multiplexed on the return fibers.  The use of a single transmission line to interrogate all of the optical hydrophones and only a pair of return highways for carrying time division multiplexed optical signals enables the cost of the optical hydrophone streamer to be much less than multi-channel streamers which have been used heretofore, such as the streamer system described in the above-referenced article by Savit and Siems.  Where the FOM's are grouped, the signals from the group are transmitted over the return fibers in the same time slot.

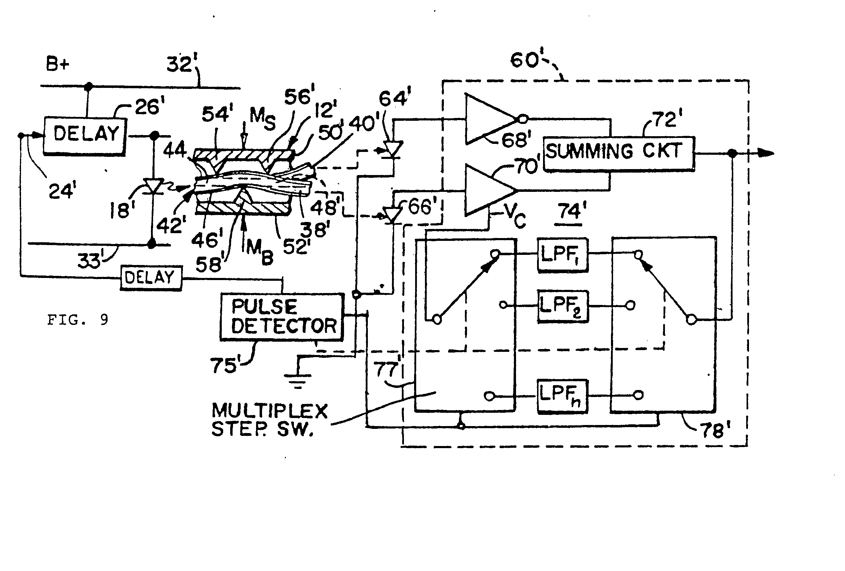

The FOM may be of the type which deforms an optical waveguide to provide a pair of optical outputs.  FOM 12' is typical and is exemplified in FIG. 9 as having an optical waveguide in the form of an optical fiber 42' having a core 44' and a clad 46'. The index of refraction of the clad 46' is lower than the index of refraction of the core.  It is to the input end of this optical fiber waveguide 42' that optical pulses are applied from its associated LED 18', when that LED 18 is pulsed by electrical pulses transmitted along the line 24' and which appear at the output of the delay circuit 26' to which the LED 18' is connected.  The fiber 42' is deformed in response to the signal being transduced which is indicated as $M_S$.

This signal may be an acoustic or seismic signal which varies the spacing 48' between plates 50' and 52' having gratings on the opposing surface thereof. This grating is represented by teeth 54' and 56' on the inside surface of the plate 50' and a tooth 58' on the inside surface of the plate 52'. As the acoustic signal pressure varies, the optical fiber 42 is deformed by being deflected between the teeth of the grating plates 50' and 52'. This deformation as explained in the above-referenced patents and articles, particularly the article by Jeunhomme and Pocholle, varies the amplitude and of course the power of the light coupled to the clad 46' from the core 44' of the fiber 42'. A portion of the light continues to be propagated through the core 44' of the fiber 42' and a portion is coupled to the clad 46'. The clad light is tapped by another optical fiber. The optical fiber which carries the core light is an output port of the fiber waveguide and is used as an output fiber 38' while the optical fiber which carries the clad light is another output port of the fiber waveguide and is used as the fiber 40'. These are the fibers which are connected to the return fibers 34' and 36' as shown in FIG. 8.

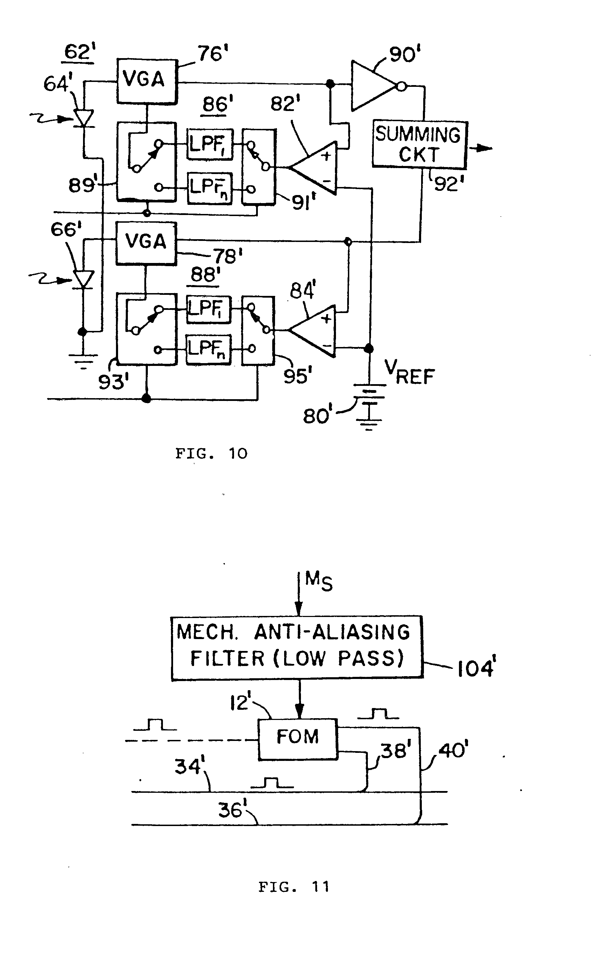

It is preferable to apply a bias $M_B$ to the deformer plates so that the average value of the amplitude, and of course the power, of the light coupled to the output fibers 38' and 40' are balanced on a steady state or average basis. Alternatively, or in addition, balancing of the DC or average value of these optical outputs may be provided by electrical circuitry. This electrical circuitry is shown in FIG. 9 as the circuit 60'. Alternatively, the circuit 62' as shown in FIG. 10 may

be used. The circuits shown in FIG. 9 and FIG. 1o are analog circuits. If digital processing of the data obtained from the optical hydrophones is desired the circuitry shown in FIG. 17 may alternatively be used. In the case of any of this circuitry 60', 62', or the circuit of FIG. 17 , outputs corresponding to the difference in the amplitude of the light coupled to the clad and in the core of the optical fibers in the FOM's 12', 14' and 16' are derived in order to minimize the noise introduced both by the light sources and in the output fibers 38' and 40' and return fibers 34' and 36'. Such a transducer system, in which the effects of noise are minimized is described particularly and is the subject matter of the initial portion of the instant application.

It is prefarable that the mechanical

noises introduced into the pair of return fibers 34' and 36' be identical. This may be achieved by routing the fibers 34' and 36' together, such that any mechanical deformations which would tend to alter the transmission loss, or in other words modulate the transmitted light intensity (inserting noise), affects each fiber identically.

In FIG. 9 the circuitry 60', which like the other circuits may be located at the collecting point, makes use of photodetectors 64' and 66' which receive outputs from the return fibers 34' and 36'. These outputs are shown coming from the output fibers 38' and 40' of FOM 12' in FIG. 9. It will be appreciated however that these signals are first communicated via the return fibers 34' and 36' before reaching the photodetectors 64' and 66'. One of the photodetectors 64' is connected to an inverting amplifier 68', while the other photodetector 66' is connected to a variable gain amplifier 70'. The outputs of these amplifiers are applied to a summing circuit 72', which, due to an inversion in the amplifier 68', provides an electrical output in the form of a pulse corresponding to the difference in amplitude of the optical pulses which are incident upon the photodetector 64' and 66'. The output is fed back through a bank of low pass filters 74' ($LPF_1$, $LPF_2$ ... $LPF_n$) via multiplex stepping switches 77' and 78'. Each filter in the bank is switched in during a successive time slot. Switching is controlled by a pulse detector 75' which responds to the pulses from one of the highway fibers, shown in FIG. 9 as from the photodetector 66' for example or by other means, such as a delay circuit actuated by the pulses which are applied to the delay circuit 26', so that the switching is in synchonism with the transmission of light pulses through the FOM 12 and the detection thereof by the diodes 64' and 66'. The filters 74' each have a cutoff frequency below the minimum frequency of interest. In the case of acoustic signals the cutoff frequency of the filters 74' may be a few Hertz, e.g., 5 Hz. The filters provides a control voltage $V_c$ to control the gain of the variable gain amplifier 70'. Since only DC and low frequency components are fed back by the filters 74', the gain of the difference circuit on a DC or average value basis becomes balanced because the gain of the amplifier 70' increases or decreases until the DC or average value of the output from the summing circuit for each individual transducer is reduced.

In FIG. 1o the photodetectors 64' and 66' are output connected to variable gain amplifiers 76' and 78'. The gain of each of these amplifiers is normalized on a DC

- 45 -

or average basis such that the average or DC value
of the amplifier outputs equals in amplitude the amplitude
of a reference potential $V_{REF}$ which is shown being
derived from a battery 80', by way of example.  The
normalization is accomplished by gain control feedback
circuits having difference amplifiers 82' and 84' to which the reference potential and the outputs from the variable gain amplifiers 76' and 78' are applied. The error signals from the differential amplifiers 82' and 84' are passed through banks of lowpass filters 86' and 88' each of which have their cutoff frequencies below the lowest frequency of interest. The filters in the banks 86' and 88' are switched so that a different filter is connected in each successive time slot by multiplex switches 89', 91', 93' and 95' as was explained for the bank of filters 74' in FIG. 9. The error signals from the lowpass filters thus control the gain of the variable gain amplifiers 76' and 78' so that the DC or average value matches and normalizes the gain to the reference potential $V_{REF}$. The outputs of the variable gain amplifiers are thus balanced on a DC or average value basis.

These outputs are applied to a difference circuit which is shown schematically as being an inverting amplifier 90' and a summing circuit 92'. The summing circuit produces the output corresponding to the difference between the optical signal pulses applied to the photodetectors 64' and 66' from the return fibers 34' and 36' (FIG. 8). The electrical outputs from the circuits 60' and 62' as shown in FIGS. 9 and 10 may be multiplexed into different channels corresponding to each of the hydrophone channels by a multiplexer which is operated at a 100 KHz rate in response detected light pulses and provides outputs separated by 10 µs corresponding to the time slots in which the pulses from the successive transducers (viz., FOM's 12', 14', 16' in FIG. 8) occur. The output of the multiplexer may be recorded for later processing which, in the case of seismic signals obtained from a streamer system such

HA-0046.1

as shown in FIG. 8., will produce seismograms.

The digital system shown in FIG. 17 also uses photodetectors 64' and 66' which respond to the optical pulses from the return fibers 34' and 36'. Analog to digital converters (ADC 94' and 96') convert these pulses into digital signals and present them for storage in separate adjacent locations in a memory 98'. This memory may be a random access memory (RAM) having locations 1a, 2a, ... na, for the digital signals (bytes) converted by the ADC 94). The memory 98' also is shown as having separate locations 1b, 2b, ... nb, for the digital signals converted by the ADC 96'. A generator which produces the pulses which are applied to the head end of the transmission line 24' is shown as a clock pulse source 100'. Pulses synchronous with these clock pulses are also applied to a processing unit indicated as a CPU 102'. The CPU may be a microprocessor, for example. The CPU is programmed so as to generate address signals which address the memory 98' to the digital signals from the ADC's 94' and 96' via the CPU 102' in the designated locations in the memory 98'. These addresses are applied to the memory by way of an address (ADR) line. Control signals are also applied by way of a control line from the CPU 102' to the memory 98'. To condition the memory to write or store the signals from the ADC's 94' and 96' or to read out the stored signals on a data line, the data is processed in the CPU 102' under program control so as to enable balancing of the DC or average value of the signals while deriving outputs corresponding to the difference between these signals on a dynamic basis, thus minimizing the noise in the system. As explained in the above-identified related application, the minimization of the noise by balancing the signals which are derived from the core and the clad of the fiber optic waveguides in the FOM's, the dynamic range of the FOM's is effectively increased. The CPU 102' provides output data which represents the parameters being sensed (viz., the acoustic or seismic signals) at each observation point. These are, in the case of the system shown in FIG. 8 , the signals from the various optical hydrophones provided by the FOM's 12', 14' and 16'. The output data may be coded to designate the observation point or hydrophone channel from which it is derived. This data may then be applied to other processing systems for the production of seismograms or other displays of the parameters sensed by the optical transducers.

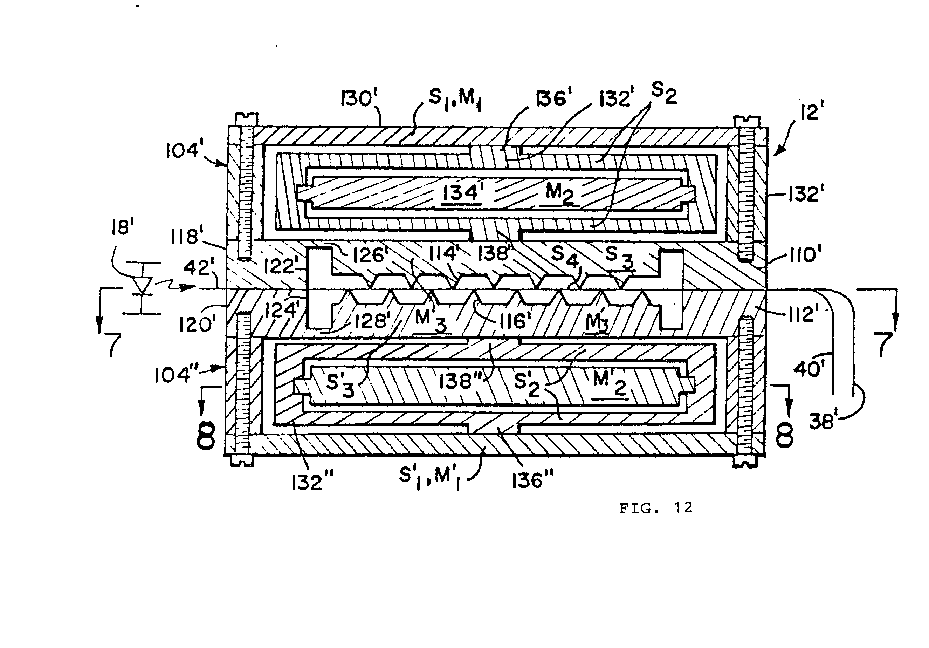

The systems hereindescribed are sampling systems where the parameter being sensed, such as acoustic pressure variations in the case of the optical hydrophones shown in FIG. 17 , are sampled at a sampling rate which is the rate at which the light pulses are individually generated at each of the LED's 18', 20' and 22'. As noted above, this sampling rate may, for example, be 1.0 KHz. Sampling theory states that for the parameter to be specified by the samples, the parameter must be a function which contains no frequencies higher than half the sampling rate. A sampling rate at twice the highest frequency of interest in the function being sampled is sometimes called the Nyquist rate. The distortion which results when the parameter being sampled has frequencies above half of the Nyquist rate is called aliasing. As shown in FIG. 11 in a general way, a mechanical lowpass anti-aliasing filter 104 is provided in the path of the mechanical signal $M_S$ before it is applied to the optical hydrophone. This optical hydrophone is shown by way of example as the FOM 12 which was described in connection with FIGS. 1 and 1.

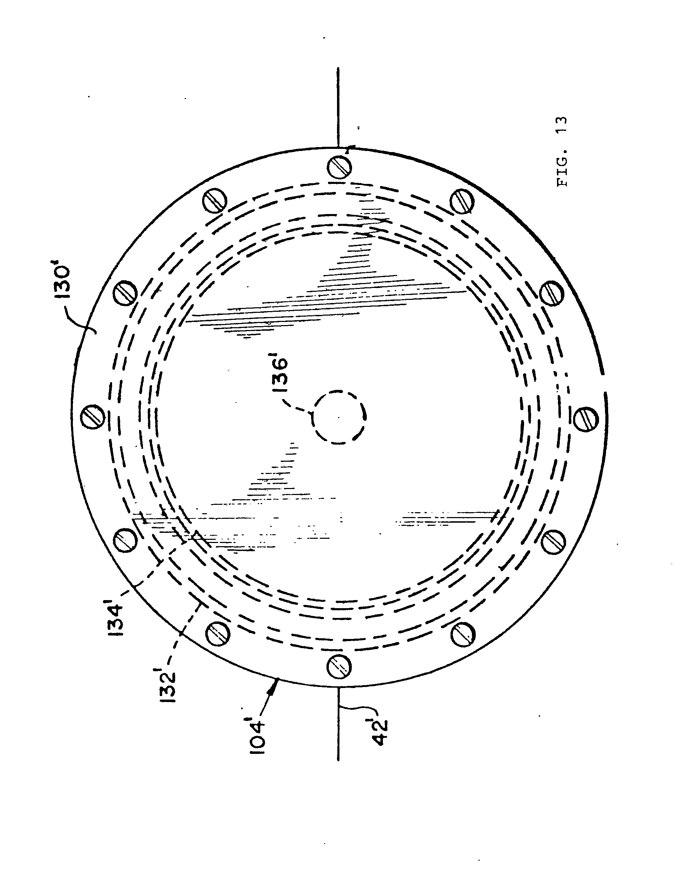

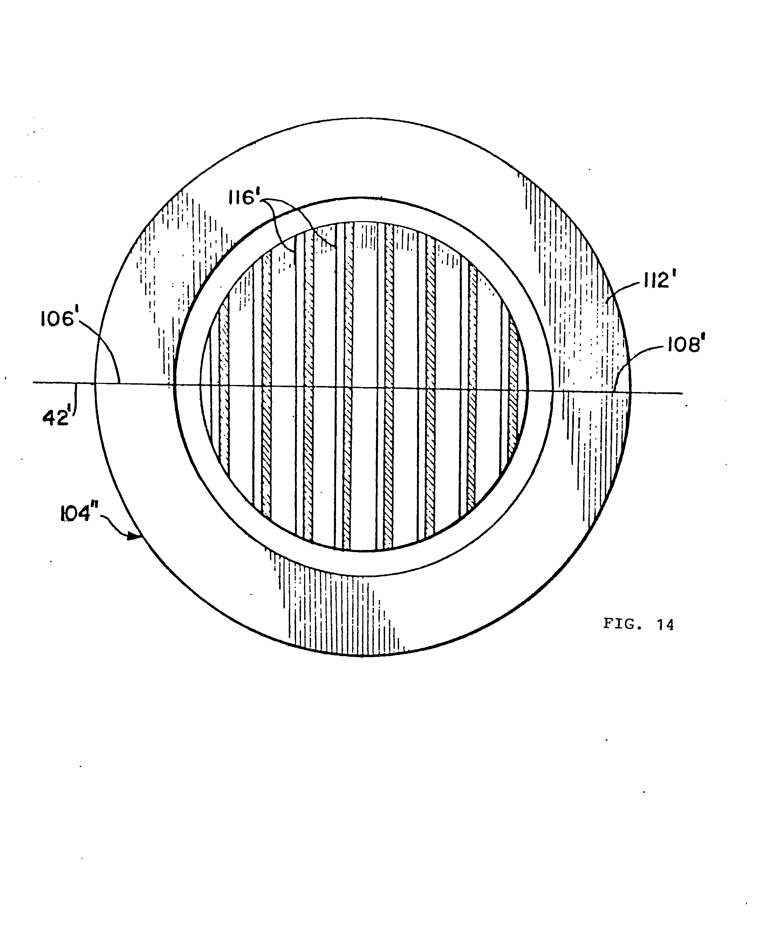

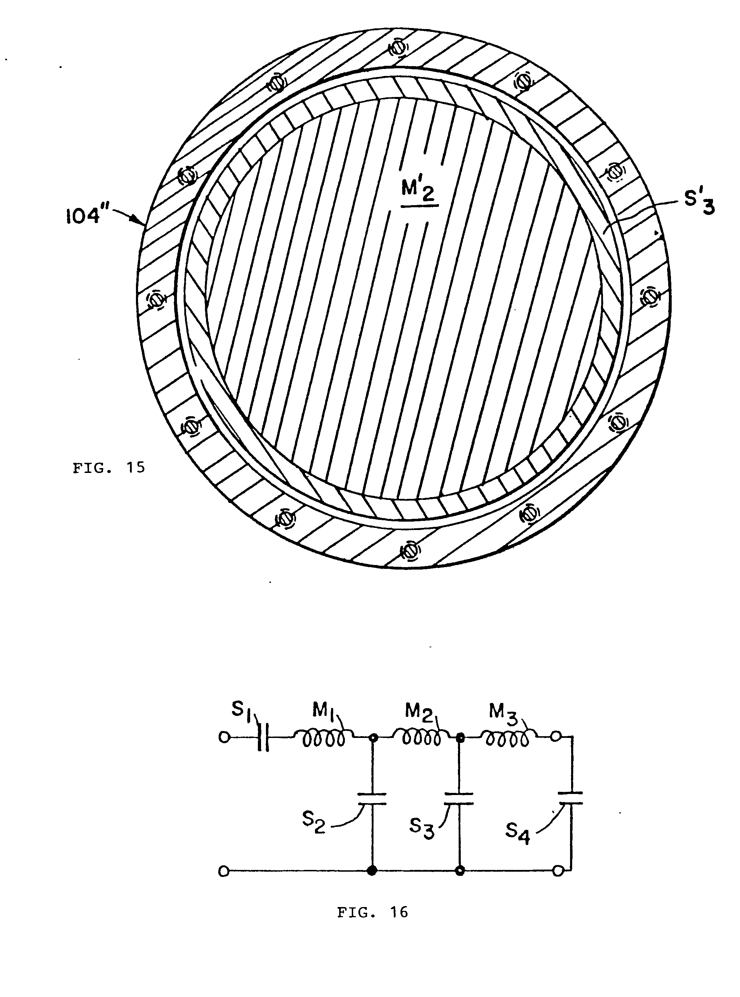

Referring to FIGS. 12 through 15, there is shown a typical one of the FOM's 12' which is provided with mechanical anti-aliasing filters 104' and 104". The FOM includes the optical fiber waveguide 42'. The light emitting diode 18' applies light pulses to the input end of the waveguide. The waveguide passes through diametral slots 106' and 108' in grating plates 110' and 112'. The gratings 114' and 116' in these plates 110' and 112' are separated from the rims 118' and 120' by annular grooves 122' and 124'. These grooves define thin walled flexural annular sections 126 and 128. The rims 118' and 120' of the plates 110' and 112' are slightly thicker than the thickness of the plates between the apexes of the teeth of the gratings and the outside surfaces of the plates. Accordingly, a predetermined mechanical bias is applied to the fiber 42' which is thereby deflected and deformed by a predetermined amount so that on a DC or average basis the light retained, for example, in the core of the fiber 42' which appears at the output fiber 38' is equal in amplitude to the light coupled, for example, to the clad which appears at the output of the fiber 40' which taps the clad light. In the event that compensation for pressure variation due to the depth under the water at which the FOM 12' is deployed is desired, an annular flexible diaphragm may be disposed within the grooves 122' and 124' to provide separate chambers which are in communication respectively with the ambient sea water environment and with the volume between the gratings 114' and 116'. The latter volume is made much less than the volume of the grooves 122' and 124'. As the pressure of the ambient water increases, gas in the volume between the gratings correspondingly increases in pressure so as to compensate for increasing pressure of the water. The hydrophone arrangement having pressure compensation as just described is the subject matter of the above-identified related application, Serial No. 74,270 which is filed concurrently herewith in the name of John V. Bouyoucos.

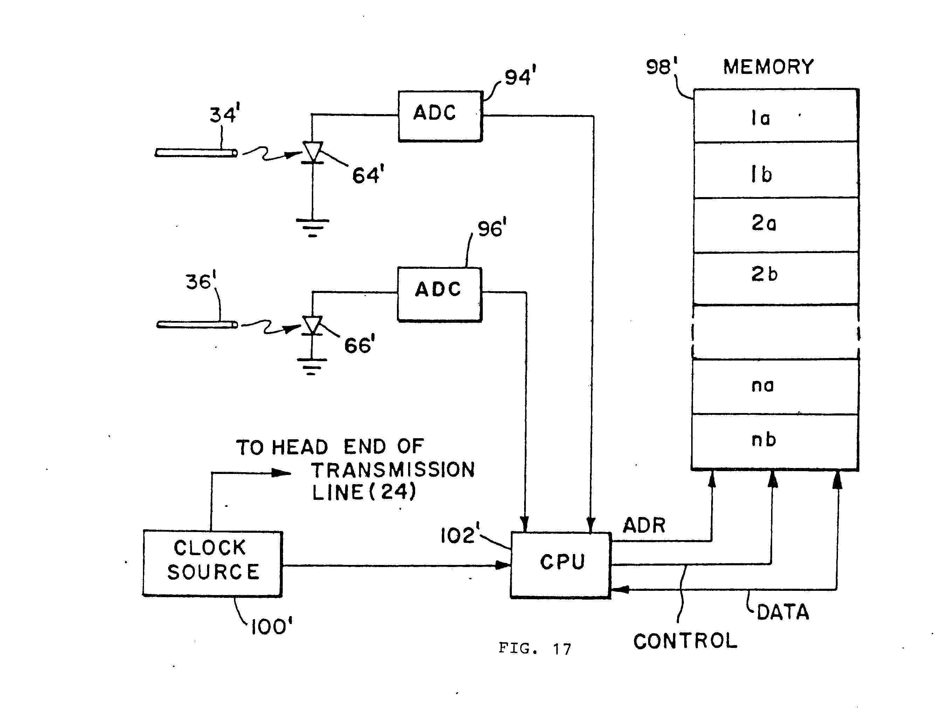

Considering the anti-aliasing filter 104', that filter is made up of a diaphragm 130' spaced from the outside surface of the grating plate 118' by a cylindrical ring 132'. The diaphragm is a flexural member which is subject to displacement in response to pressure variations as caused by acoustic energy such as seismic waves. The diaphragm 130' has a stiffness $S_1$ and a mass $M_1$. Coupling the diaphragm 130' to the grating plate 118' are two members 132' and 134'. The member 134' may be a metal disc having a mass $M_2$, which disc is rigid. The disc is contained within a hollow cylinder provided with tabs 136' and 138' at opposite ends thereof. This hollow cylinder is the member 132 which couples the diaphragm 130' to the grating plate 118'. The tabs 136' and 138' are disposed with their axes along the axis of the grating plate 118 and diaphragm 130'. The member 132' may be made of plastic such that it is very flexible but has relatively little mass. The stiffness of the member 132' is indicated as $S_2$ while the mass of the member 134' is indicated as $M_2$. The grating plate has a mass and stiffness components indicated as $M_3$ and $S_3$. The optical fiber 42' presents a stiffness to the system indicated as $S_4$. The acoustic equivalent circuit of the mechanical anti-aliasing filter 104 is shown in FIG. 16 It is apparent from FIG. 16 that the filter is a low-pass filter. The various components may be sized so that the cutoff frequency of the filter 104' is well below 500 $H_z$ where the interrogation or sampling rate is 1.0 KHz. Aliasing distortion is then eliminated. Another anti-aliasing filter 104" is provided on the outside of the grating plate 120' and cooperates with that grating plate. The design of the anti-aliasing filter 104" is the same as the design of the above-described anti-aliasing filter 104', and corresponding parts are mixed with corresponding reference numerals but with primes (") at the end thereof.

From the foregoing description it will be apparent that there has been provided an improved transducer array system which is especially adapted for use in and as part of an optical hydrophone seismic streamer. Variations and modifications in the hereindescribed system will undoubtedly suggest themselves to those skilled in the art. Accordingly, the foregoing description should be taken merely as illustrative and not in a limiting sense.

The invention described so far may be summarized as follows:

- 52 -

1.  A transducer system which comprises an array of optical transducers each having an optical waveguide with at least two output ports for propagating light applied to said waveguide, means responsive to the parameter to be transduced for deforming said guide to modulate the amplitude of said light propagated through the waveguide to produce output optical signals at the output ports of opposite relative polarity, separate electro-optical light sources for applying light to each of said waveguides, a pair of optical waveguides providing an optical signal highway, said pair of highway waveguides being coupled to the output ports of each of said transducer waveguides, and means for successively enabling each of said sources to apply successive pulses of light to each of said transducer waveguides whereby optical signals from each of said transducers appear in time division multiplexed relationship on said highway waveguides.

2.  The invention as set forth in item 1 wherein said enabling means comprises a plurality of delay circuit means connected in succession for transmitting said electrical pulses; each of said delay circuit means having outputs connected separately to each of said light sources.

3.  The invention as set forth in item 1 wherein said light sources are light emitting diodes.

4.  The invention as set forth in item 1 further comprising means connected to said highway waveguides for providing electrical outputs corresponding to the difference in amplitude of the optical signals from the output ports of said guides.

5.  The invention as set forth in item 1 further comprising means for adjusting the average amplitude of at least one of said optical signals and electrical signals corresponding thereto such that said electrical outputs are minimized in the absence of the parameter being transduced.

6.  The invention as set forth in item 1 further comprising separate photodetectors for converting the optical signals propagated along said highway waveguides into a pair of said electrical signals, and a feedback circuit responsive to said electrical outputs for varying the average amplitude of one of said pair of electrical signals to provide balancing of the average amplitudes thereof.

7.  The invention as set forth in item 1 further comprising separate photodetectors for converting the optical signals propagated along said highway waveguides into electrical signals, means for normalizing the average amplitude of each of said electrical signals, and means for providing said electrical outputs in response to the difference between said normalized electrical signals.

8. The invention as set forth in item 1 wherein said balancing means comprises means for applying predetermined deformations to said transducer waveguides such that said optical signals from said two ports have equal amplitudes in the absence of the parameter being transduced.

9. The invention as set forth in item 1 further comprising anti-aliasing means for applying the parameter to be transduced to said deforming means.

10. The invention as set forth in item 1 wherein said anti-aliasing means is a mechanical lowpass filter having a cutoff frequency no greater than one-half the rate at which said light sources are individually activated.

11. The invention as set forth in item 1 wherein said transducer waveguides each comprises a first length of optical fiber with a core and a clad which provide said two optical signal output ports, said light sources being disposed to apply said light pulses to an end of said fiber on one side of said deforming means, a second length of optical fiber coupled to said clad on the opposite side of said deforming means, and said first and second fibers being coupled to different ones of said highway waveguides, said highway waveguides being separate optical fibers.

HA-0046.1

12.  The invention as set forth in item 1 wherein said deforming means comprises a pair of members between which said fiber is disposed, at least one of said members having a grating for applying pressure to said fiber in response to the parameter to be transduced.

13.  The invention as set forth in item 1 wherein said member having said grating further comprises means flexurally mounting said grating, a diaphragm also mounted on said member having said grating, and means providing a mechanical anti-aliasing filter coupling said diaphragm to said grating.

14.  The invention as set forth in item 1 further comprising a streamer cable adapted to be transported through a body of water, said deforming means each including means responsive to acoustic energy in the water as said parameter for deforming said transducer waveguides, and said transducer waveguides being disposed successively along the length of said streamer cable, and said light sources, enabling means and highway waveguides being contained in said cable.

15.  The invention as set forth in item 1 further comprising means for providing a first and a second train of electrical pulses which are synchronous, the second being delayed with respect to the first, said enabling means being responsive to said first train of pulses, first and second photodetector means separately responsive to the optical signals from said pair of highway waveguides for converting said optical signals into corresponding electrical signals, analog to digital converter means enabled by second train of pulses responsive to said electrical signals for converting said electrical signals into digital signals representing the amplitudes thereof, memory means having storage for said digital signals, processing means responsive to said second train of pulses for controlling said memory means to store said digital signals occurring in different times corresponding to the times of occurrence of optical signals from different ones of said transducers in predetermined locations therein, said processing means including means for deriving outputs corresponding to the parameter being transduced from said stored digital signals.

- 57 -

## CLAIMS

1. An optical sensor system which comprises an optical waveguide first and second means each for detecting light which as propagated along different paths in said waveguide to reach said detection means, means for deforming said waveguide to provide a bias deformation which, on the average, approximately equally partitions the light energy which propagates to said detecting means along said different paths, and to modulate the partitioning of light energy between said paths in response to the parameter to be sensed, and means for providing an electrical output corresponding to the difference between light energies detected by said first and second detection means.

2. The invention as set forth in Claim 1 further comprising means for minimizing the average amplitude of said electrical output.

3. The invention as set forth in Claim 2 wherein said first and second detecting means provide first and second electrical signals and wherein said minimizing means includes means for normalizing said electrical signals, and means responsive to the difference between said normalized electrical signals for providing said electrical output.

4. The invention as set forth in Claim 1 wherein said first and second detecting means provide first and second electrical signals, said electrical output providing means including feedback means for balancing the average amplitude of said electrical signals.

5.    The invention as set forth in Claim 4 wherein said feedback means comprises a lowpass filter circuit having a cutoff frequency below the lowest frequency of interest in said electrical output, and means for feeding back said electrical output through said filter circuit for controlling the amplitude of at least one of said first and second electrical signals.

6. A transducer system which comprises an array of optical transducers each having an optical waveguide with at least two output ports for propagating light applied to said waveguide, means responsive to the parameter to be transduced for deforming said guide to modulate the amplitude of said light propagated through the waveguide to produce output optical signals at the output ports of opposite relative polarity, separate electro-optical light sources for applying light to each of said waveguides, a pair of optical waveguides providing an optical signal highway, said pair of highway waveguides being coupled to the output ports of each of said transducer waveguides, and means for successively enabling each of said sources to apply successive pulses of light to each of said transducer waveguides whereby optical signals from each of said transducers appear in time division multiplexed relationship on said highway waveguides.

7. The invention as set forth in Claim 6 wherein said enabling means comprises a plurality of delay circuit means connected in succession for transmitting said electrical pulses, each of said delay circuit means having outputs connected separately to each of said light sources.

- 60 -

8.     The invention as set forth in Claim 6 wherein said light sources are light emitting diodes.

9.     The invention as set forth in Claim 6 further comprising means connected to said highway waveguides for providing electrical outputs corresponding to the difference in amplitude of the optical signals from the output ports of said guides.

1o.     The invention as set forth in Claim 9 further comprising means for adjusting the average amplitude of at least one of said optical signals and electrical signals corresponding thereto such that said electrical outputs are minimized in the absence of the parameter being transduced.

LIGHT INPUT

MECHANICAL SIGNAL INPUT

FIBER OPTIC CLAD / CORE MODULATOR 10

BIAS

OPTO ELECTRIC TRANSDUCER 12

OPTO ELECTRIC TRANSDUCER 14

DIFF. CIRCUIT 16

OUTPUT

FIG. 1

INV. AMPL. 38

VAR. GAIN AMPL. 40

SUMMING CKT. 42

LOW PASS FILTER 44

OUTPUT

34

36

32

26 28

22 26

30

24

18

20

FIG. 2

FIG. 3

0027540

FIG. 4

FIG. 5a

FIG. 5b

FIG. 5c

FIG. 6

FIG. 7

FIG. 8

OPTICAL FIBER OPTICAL FIBER
(CORE LIGHT) (CLAD LIGHT)

6/13

0027540

0027540

FIG. 9

FIG. 10

FIG. 11

FIG. 12

FIG. 13

FIG. 14

FIG. 15

FIG. 16

FIG. 17